# FASCICULE DE BREVET EUROPEEN

(11) **EP 2 139 750 B1**
(45) Date de publication et mention de la délivrance du brevet: **02.03.2011**
(21) Numéro de dépôt: 08805673.4
(22) Date de dépôt: 21.04.2008
(51) Int. Cl.: B62H 3/04

(54) **DISPOSITIF ANTIVOL DE MAINTIEN EN STATIONNEMENT D'UN VEHICULE A DEUX ROUES**
SCHLOSS ZUR HALTUNG EINES ZWEIRÄDRIGEN FAHRZEUGS IM GEPARKTEN ZUSTAND
LOCK FOR KEEPING A TWO-WHEELED VEHICLE IN A PARKED CONDITION

(30) Priorité: 20.04.2007 FR 0754596
(43) Date de publication de la demande: 06.01.2010
(73) Titulaire: Laquieze, Alain, 15140 Besse (FR); Choulova, Larissa, Kazan (Tatarstan) 420095 (RU)
(72) Inventeur: Laquieze, Alain, 15140 Besse (FR); Choulova, Larissa, Kazan (Tatarstan) 420095 (RU)
(74) Mandataire: Rhein, Alain
(86) Numéro de dépôt international: PCT/FR2008/050714
(87) Numéro de publication internationale: WO 2008/148963

(56) Documents cités:
- EP-A- 0 103 308
- GB-A- 2 026 876
- JP-U- 1 154 084
- US-A- 5 350 266
- US-A1- 2003 027 692
- US-A1- 2006 108 297

## Description

La présente invention a pour objet un dispositif antivol de maintien en stationnement d'un véhicule à deux roues.

De manière traditionnelle le stationnement des véhicules à deux roues, qu'ils soient motorisés ou non, est réalisé au travers soit de moyens propres, tels que des béquilles, soit de structures permettant une prise d'appui, par coincement d'une roue par exemple, tandis que la fonction antivol est assurée par une chaîne ou analogue pourvue de moyens de fermeture à serrure, tel un cadenas.

Les moyens utilisés présentent l'inconvénient d'être peu efficaces. En effet, un véhicule à deux roues non relié fixement à une structure peut facilement être enlevé sans avoir à se soucier de son système antivol qui pourra être forcé puis retiré ultérieurement. S'il est fixé à une structure par l'intermédiaire d'une roue, cette dernière peut aisément être démontée afin d'enlever le reste du véhicule. Selon le matériel utilisé, le voleur peut aussi sectionner le système antivol.

Par ailleurs, pour la plupart des dispositifs actuels il subsiste le risque de chute des véhicules ainsi stationnés, ce qui peut occasionner des dégâts audit véhicule, au mobilier urbain ainsi que des blessures à d'éventuels passants.

Pour pallier ces inconvénients il a été proposé différents dispositifs destinés à permettre un stationnement sécurisé des véhicules à deux roues. Les plus efficaces sont ceux qui se présentent sous la forme d'un box ou d'un coffre fermé par une porte équipée d'une serrure et qui est apte à contenir un véhicule. Ces dispositifs, décrits par exemple dans les documents FR 2.762.343 et FR 2.764.261, présentent l'inconvénient d'un encombrement important pour une mise en place coûteuse et complexe, tout en ajoutant à un aspect inesthétique à l'ensemble.

D'autres dispositifs permettent de saisir le véhicule à deux roues par le cadre, comme décrit dans le document WO 97/30884. Un tel dispositif se limite dans son utilisation à une certaine forme de véhicule à deux roues, et plus particulièrement des bicyclettes dont le cadre présente une certaine architecture, notamment une barre horizontale simple à saisir.

Un autre document, FR 2 877 635, décrit l'état de la technique le plus proche avec un dispositif apte à saisir par crochetage une roue ou le cadre d'un véhicule pour le maintenir. Toutefois, à l'instar des autres dispositifs de l'état de la technique, il ne permet pas de s'adapter à tout type de véhicule à deux roues, les diamètres de ces dernières étant différents d'un modèle à un autre et d'un type de véhicule à un autre, par exemple une moto comparé à un scooter.

D'autres dispositifs connus consistent à blocage l'axe d'une des roues du véhicule par vissage de part et d'autre. De tels dispositifs sont décrits dans les documents GB 2 026 876 et US 2003/027 692. Toutefois, ces solutions ne sont dédiées qu'à une unique dimension d'axe de roue en raison du filetage coopérant avec lesdites vis.

De plus, les dispositifs et solutions existants peuvent endommager ou abîmer les véhicules, notamment au niveau de leur maintien par vissage au niveau de l'axe de la roue.

La présente invention a pour but de proposer un dispositif antivol de maintien en stationnement d'un véhicule à deux roues, permettant de remédier aux divers inconvénients précités.

En particulier, le dispositif antivol selon l'invention maintient en stationnement un véhicule à deux roues au travers de moyens aptes à enserrer l'axe d'une desdites roues, tout en s'adaptant au diamètre de celle-ci.

Pour ce faire, l'invention concerne plus particulièrement un dispositif antivol de maintien en stationnement d'un véhicule à deux roues, constitué d'un support fixe pourvu de moyens mobiles aptes à passer d'une position escamotée d'ouverture à une position de blocage d'au moins une desdites roues, et inversement, caractérisé par le fait que lesdits moyens sont aptes à bloquer ladite roue par enserrement des extrémités de son axe de rotation au travers de tampons en matière élastique.

Selon une autre caractéristique de l'invention, lesdits moyens de blocages se présentent sous la forme d'au moins deux bras articulés sur ledit support et aptes à s'adapter au diamètre de ladite roue.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue globale du dessus du dispositif antivol selon l'invention ;
- la figure 2 est une vue d'un détail dudit dispositif antivol ;
- la figure 3 est une vue d'un autre détail de l'invention ;
- la figure 4 représente le dispositif en position de maintien d'un véhicule à 2 roues ;
- la figure 5 est une représentation schématique dessus de l'invention ; et
- la figure 6 est une représentation schématique de l'utilisation du dispositif antivol selon deux alternatives avec des roues de diamètres différents.

La présente invention concerne le maintien en stationnement d'un véhicule à deux roues et a pour objet un dispositif 1 antivol de maintien en stationnement d'un véhicule 2 à deux roues.

Un tel dispositif antivol 1 est constitué d'un support 3 destiné à être fixé au sol. Ce support 3 est conformé de manière à recevoir une roue 4 dudit véhicule, préférentiellement mais non limitativement la roue 4 avant.

Pour ce faire, ce support 3 est constitué au moins en partie d'une goulotte 5, formant une glissière pour le roulement de la roue 4. Cette goulotte 5 comprend un fond 6 surmonté par deux bords latéraux 7, servant ainsi de rampe pour l'insertion de la roue 4 au sein du dispositif 1. Ces bords 7 peuvent être inclinés de manière à offrir une légère pente à l'intérieur de la goulotte 5, facilitant la progression de la roue 4 à le long de ladite goulotte 5 et diminuant les risque d'endommagement du dispositif 1 en cas d'insertion en biais d'un véhicule 2.

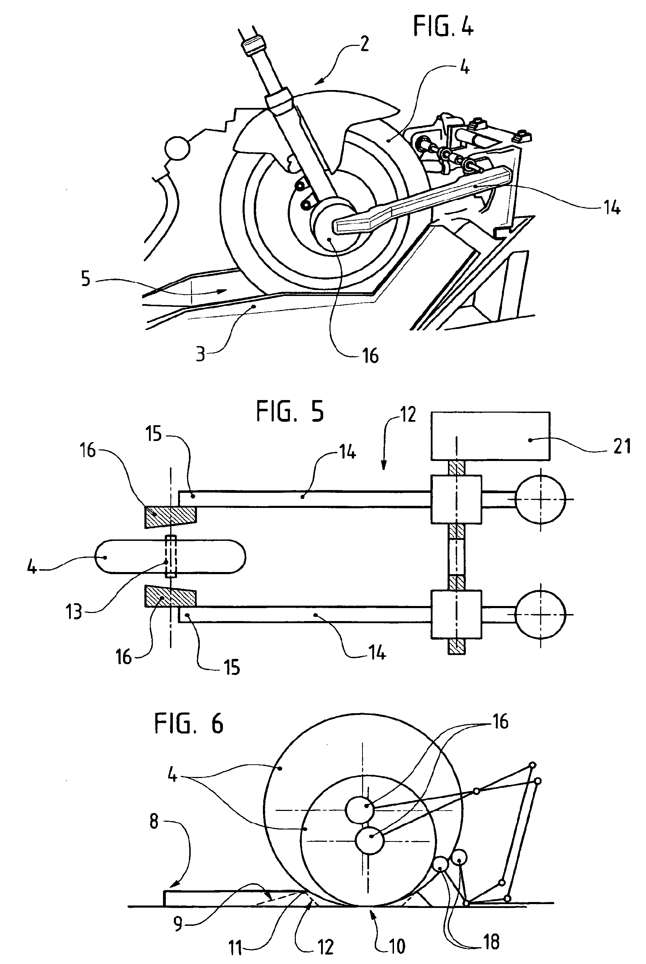

Plus particulièrement, comme visible sur la figure 6, cette goulotte 5 comprend à une extrémité une pente 9 inclinée vers le haut depuis une ouverture 8 vers l'extrémité opposée. Avantageusement, une partie 22 de cette pente 9 décline de manière à former un creux 10 au sein duquel ladite roue 4 vient se caler. En somme, le fond 6 forme une crête 11 que la roue 4 du véhicule doit franchir afin de s'enclencher au sein du dispositif 1.

On notera que, selon un mode particulier de réalisation, la partie déclinante 22 de la pente 9 peut être articulée par actionnement manuel ou automatique de manière à faciliter l'extraction du véhicule, en particulier dans le cas de moto d'un poids élevé, difficile à manoeuvrer en marche arrière.

Une autre particularité réside dans le fait que le support 3 et la goulotte 5 peuvent être articulés de manière à s'adapter au dénivelé de sol, dans le cas d'une surface de chaussée non plane.

Le support 3 comprend aussi, en fin de goulotte 5, des moyens mobiles 12 aptes à passer d'une position escamotée d'ouverture à une position de blocage de ladite roue 4, et inversement.

Avantageusement, lesdits moyens 12 sont aptes à bloquer ladite roue 4 par enserrement des extrémités de son axe 13 de rotation. Plus particulièrement, ces moyens mobiles 12 viennent exercer une pression de part et d'autre du moyeu de la roue 4. Pour ce faire, lesdits moyens 12 se présentent sous la forme d'au moins deux bras 14 articulés sur ledit support 3. Chaque bras 14 est articulé à une extrémité à des moyens d'actionnement automatique ou manuel, l'autre extrémité opposée 15 restant libre. Cette dernière comprend un tampon 16 venant au contact des extrémités saillantes de l'axe 13 de la roue 4. La déformation des tampons 16 empêche l'endommagement de l'axe. C'est pourquoi ils sont constitués d'une matière élastique ou flexible. Cette matière peut être synthétique ou naturelle, par exemple en caoutchouc polyuréthane, en mousse expansée à mémoire de forme ou tout autre matière.

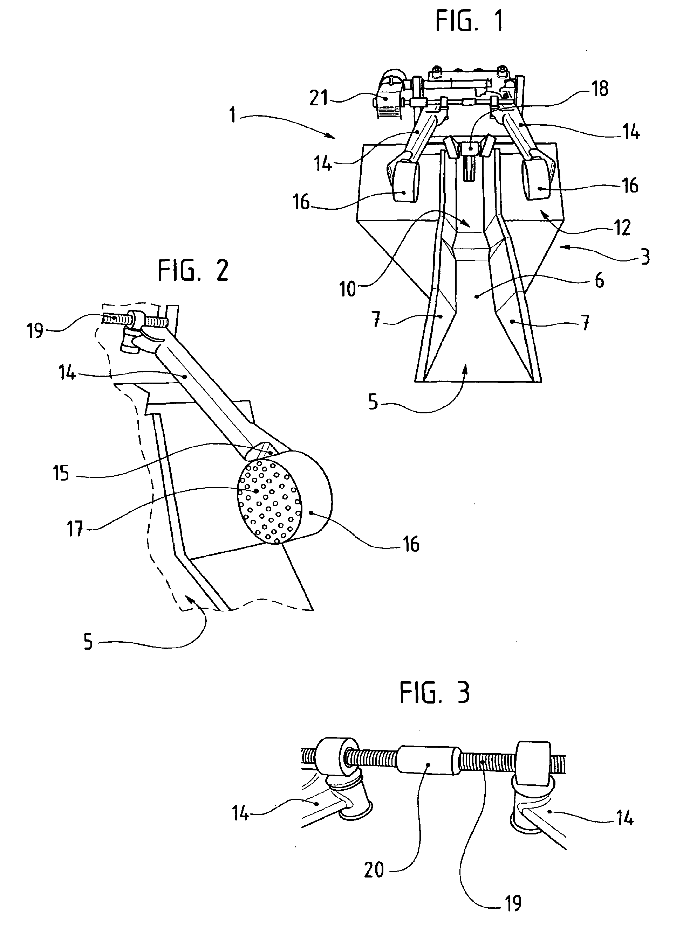

De plus, comme visible sur la figure 2, des perforations 17 peuvent être réalisées sur la surface de contact desdits tampons 16. Ces trous améliorent l'élasticité du matériau. Ces tampons 16 peuvent être de toute forme, mais plus particulièrement ronde ou ovale, d'un diamètre supérieur à l'axe 13.

Selon un mode de réalisation particulier, chaque tampon a une surface de contact inclinée vers l'intérieur du dispositif 1. Cette inclinaison améliore la résistance au retrait de la roue 4. En effet, comme visible sur la figure 5, une fois en place, l'orientation des tampons 16 rend plus difficile l'enlèvement de la roue 4.

Un autre avantage du dispositif antivol 1 selon l'invention réside dans le fait qu'il s'adapte à tout type de véhicule à deux roues. En particulier, les moyens mobiles 12 sont articulés de manière à s'adapter au diamètre de ladite roue 4. Plus particulièrement, lesdits moyens 12 s'adapte en fonction du diamètre de la roue 4, sous la poussée de cette dernière.

Pour ce faire, lesdits moyens 12 comprennent une butée 18 articulée par rapport auxdits moyens mobiles 12 de manière à les entraîner en vis-à-vis de l'axe 13 de la roue 4 sous l'action de la poussée de ladite roue 4. Cette butée 18 se situe dans l'alignement de la goulotte 5. Cette butée peut se présenter sous la forme d'un galet apte à recevoir la pression exercée par la roue 4 lors de sa mise en place dans le creux 10.

Le déplacement de la butée 18 entraîne les bras 14 des moyens mobiles 12 selon un mouvement de rotation par rapport au support 3 de manière à positionner les tampons 16 en vis-à-vis de l'axe 13. Cette trajectoire circulaire possède un rayon suffisamment important pour ne pas entraîner d'écart significatif entre les différentes positions des axes 13 des deux roues 4 de diamètre différent. La figure ??? montre schématiquement un mode de réalisation d'une articulation entre la butée 18 et les bras 14 dans deux positions correspondant à des diamètres de roues 4 différents.

Une fois en position, les tampons 16 en vis-à-vis de l'axe 13, les bras 14 se resserrent. Selon le mode de réalisation visible sur les figures, une vis 19 est actionnée automatiquement par des moyens d'entraînement 21, par exemple un moteur. Cette vis 19, de type sans fin, est connectée aux moyens mobiles 12, plus particulièrement à chacun des bras 14 au niveau des extrémités respectives de ladite vis 19. Selon le sens de rotation de cette vis 19, elle les écarte ou les resserre.

De plus, comme visible sur la figure 3, sont prévus des moyens de déverrouillage et de réouverture des bras 14 par actionnement manuel du passage d'une position à une autre. De préférence, au niveau de ladite vis 19, des moyens de préhension 20 peuvent être saisis manuellement pour faire tourner la vis 19. Ce manchon 20 est solidaire du pas de la vis 19. Cette alternative peut nécessiter le débrayage des moyens automatique d'entraînement 21, notamment en cas de panne ou de dysfonctionnement du dispositif 1 afin de permettre de libérer le véhicule 2.

Selon un mode de réalisation particulier, l'extrémité des bras 14 opposée aux tampons 16 peut être solidaire d'un contre poids, non représenté, facilitant la rotation des moyens mobiles 12.

Le dispositif antivol 1 comprend aussi avantageusement une coque de carénage enfermant la mécanique et la protégeant des intempéries, des chocs et de toute tentative d'effraction.

De plus, des capteurs peuvent être à même de mesurer la pression exercée par les bras 14 afin de la rendre réglable, en fonction de la résistance rencontrée lors du serrage. En effet, la pression exercée pour un scooter ne doit pas être la même que pour une moto. Pour de ce faire, un limiteur de couple peut agir au serrage maximum des bras 14. Il est obtenu par mesure du courant consommé par le moteur lors du serrage, comparé à un seuil de courant pour un serrage optimal.

Le dispositif antivol 1 de maintien offre un verrouillage mécanique rendant difficilement possible toute tentative d'extraction du véhicule 2.

Un autre avantage réside dans une mécanique simple et robuste qui peut facilement être commandée et couplée à des moyens d'identification et/ou de paiement automatisé.

Un tel dispositif antivol 2 trouvera donc une application toute particulière dans les lieux de parking de véhicules à deux roues, en intérieur comme en extérieur.

## Revendications

1. Dispositif antivol (1) de maintien en stationnement d'un véhicule (2) à deux roues, constitué d'un support (3) fixe pourvu de moyens mobiles (12) aptes à passer d'une position escamotée d'ouverture à une position de blocage d'au moins une desdites roues (4), et inversement, **caractérisé par le fait que** lesdits moyens (12) sont aptes à bloquer ladite roue (4) par enserrement des extrémités de son axe de rotation (13) au travers de tampons en matière élastique.

2. Dispositif antivol (1) selon la revendication 1, **caractérisé par le fait que** lesdits moyens (12) de blocages se présentent sous la forme d'au moins deux bras (14) articulés sur ledit support (3) et aptes à s'adapter au diamètre de ladite roue (4).

3. Dispositif antivol (1) selon l'une quelconque des revendications précédentes, **caractérisé par le fait que** ledit tampon (16) comprend une surface de contact inclinée vers l'intérieur du dispositif (1).

4. Dispositif antivol (1) selon l'une quelconque des revendications précédentes, **caractérisé par le fait que** chaque tampon (16) comprend des perforations (17).

5. Dispositif antivol (1) selon l'une quelconque des revendications précédentes, **caractérisé par le fait que** lesdits moyens sont articulés de manière à s'adapter au diamètre de ladite roue sous la poussée de cette dernière.

6. Dispositif antivol (1) selon la revendication 5, **caractérisé par le fait que** lesdits moyens (12) comprennent une butée (18) articulée par rapport auxdits moyens mobiles (12) de manière à entraîner lesdits moyens mobiles (12) en vis-à-vis de l'axe (13) de la roue (4) sous l'action de la poussée de ladite roue (4).

7. Dispositif antivol (1) selon l'une quelconque des revendications précédentes, **caractérisé par le fait que** lesdits moyens (12) comprennent des moyens d'actionnement manuel du passage d'une position à une autre.

8. Dispositif antivol (1) selon la revendication 7, **caractérisé par le fait que** lesdits moyens d'actionnement manuel se présentent sous la forme d'une vis (19) connectée auxdits moyens mobiles (12) de manière à les écarter ou les resserrer selon son sens de rotation.

## Claims

1. Anti-theft device (1) for maintaining parked a two-wheel vehicle (2), formed of a fixed support (3) provided with movable means (12) capable of passing from a withdrawn open position into a blocked position of at least one of said wheels (4), and vice-versa, wherein said means (12) are capable of blocking said wheel (4) by enclosing the ends of its axis of rotation (13) through caps made out of an elastic material.

2. Anti-theft device (1) according to claim 1, wherein said blocking means (12) are in the form of at least two arms (14) hingedly connected to said support (3) and capable of being adapted to the diameter of said wheel (4).

3. Anti-theft device (1) according to any of the preceding claims, wherein said cap (16) comprises a contact surface inclined towards the inner side of the device (1).

4. Anti-theft device (1) according to any of the preceding claims, wherein each cap (16) comprises perforations (17).

5. Anti-theft device (1) according to any of the preceding claims, wherein said means are hinged so as to be adapted to the diameter of said wheel under the thrust of the latter.

6. Anti-theft device (1) according to claim 5, wherein said means (12) comprise a stop (18) hinged with respect to said movable means (12) so as to drive said movable means (12) in front of the axis (13) of the wheel (4) under the action of the thrust of said wheel (4).

7. Anti-theft device (1) according to any of the preceding claims, wherein said means (12) comprise means for manually actuate the passing over from one position into another position.

8. Anti-theft device (1) according to claim 7, wherein said manual actuating means are in the form of a screw (19) connected to said movable means (12) so as to separate them or to bring them closer, according to its direction of rotation.

## Patentansprüche

1. Diebstahlsicherung (1), um ein Zweiräderfahrzeug (2) an seinem Parkstand zu halten, bestehend aus einem festen Halter (3), der mit beweglichen Mitteln (12) versehen ist, die geeignet sind, um von einer eingezogenen offenen Position in eine Sperrposition von wenigstens einem der besagten Räder (4) zu gehen, und umgekehrt, **dadurch gekennzeichnet, dass** die besagten Mittel (12) geeignet sind, um das besagte Rad (4) zu sperren, indem die Enden seiner Drehachse (13) von Kappen aus elastischem Material umschlossen werden.

2. Diebstahlsicherung (1) nach Anspruch 1, **dadurch gekennzeichnet, dass** die besagten Sperrmittel (12) als wenigstens zwei Arme (14) ausgestaltet sind, die gelenkig mit dem besagten Halter (3) verbunden und geeignet sind, um dem Durchmesser des besagten Rades (4) angepasst zu werden.

3. Diebstahlsicherung (1) nach irgendeinem der vorgehenden Anspruche, **dadurch gekennzeichnet, dass** die besagte Kappe (16) eine zur Innenseite der Vorrichtung (1) geneigte Berührungsfläche umfasst.

4. Diebstahlsicherung (1) nach irgendeinem der vorgehenden Anspruche, **dadurch gekennzeichnet, dass** jede Kappe (16) Durchbohrungen (17) umfasst.

5. Diebstahlsicherung (1) nach irgendeinem der vorgehenden Anspruche, **dadurch gekennzeichnet, dass** die besagten Mittel gelenkig sind, sodass sie dem Durchmesser des besagten Rades unter dem Druck dieses letzteren angepasst werden.

6. Diebstahlsicherung (1) nach Anspruch 5, **dadurch gekennzeichnet, dass** die besagten Mittel (12) einen Anschlag (18) umfassen, der bezüglich den besagten beweglichen Mitteln (12) gelenkig ist, sodass die besagten beweglichen Mittel (12) unter der Wirkung des Druckes des besagten Rades (4) gegenüber der Achse (13) des Rades (4) getrieben wird.

7. Diebstahlsicherung (1) nach irgendeinem der vorgehenden Anspruche, **dadurch gekennzeichnet, dass** die besagten Mittel (12) Mittel umfassen, um den Übergang von einer Position in die andere manuell zu betätigen.

8. Diebstahlsicherung (1) nach Anspruch 7, **dadurch gekennzeichnet, dass** die manuelle Betätigungsmittel als eine Schraube (19) ausgestaltet sind, die mit den besagten beweglichen Mitteln (12) verbunden ist, sodass sie diese je nach ihrer Drehrichtung von einander entfernen oder zusammenziehen.
